# EUROPEAN PATENT APPLICATION

(11) **EP 1 827 016 A1**
(43) Date of publication of application: **29.08.2007**
(21) Application number: 05814588.9
(22) Date of filing: 30.11.2005
(51) Int. Cl.: H04N 5/76, G11B 20/10, G11B 27/00, G11B 27/34, H04N 7/173

(54) **RECORDING DEVICE AND RECORDING METHOD**

(30) Priority: 15.12.2004 JP 2004362687
(71) Applicant: Pioneer Corporation, Tokyo 153-8654 (JP)
(72) Inventor: MIYASATO, Hajime, Tsurugashima-shi, Saitama 3502288 (JP); OTA, Hiroyuki, Tsurugashima-shi, Saitama 3502288 (JP)
(74) Representative: Manitz, Finsterwald & Partner GbR
(86) International application number: PCT/JP2005/022404
(87) International publication number: WO 2006/064692

(57) **Abstract**

Disclosed are a recording apparatus and a recording method that are capable of reliably selecting and recording a program desired by a user of a broadcasting program that the user is currently watching and a reservation program. The recording apparatus includes a receiving unit, a recording unit that stores the contents in a recording medium, an input unit through which a recording start instruction of current contents that are being currently received is inputted, a reservation-setting unit that determines whether reservation information of reservation contents that are likely to overlap with the current contents in terms of recording time zone is set, according to the recording start instruction, and generates a selection picture, a receiving control unit that controls the receiving unit to selectively receive one of the current contents and the reservation contents according to a selection instruction inputted to the input unit while displaying the selection picture, and a recording control unit that starts recording of the selectively received contents.

## Description

### Technical Field

The present invention relates to a technique for recording contents such as video, audio and so on, and more specifically, to a technique for reserving record of contents such as television broadcasting programs provided via a wireless transmission line or a wired transmission line.

### Background Art

In recent years, recording apparatuses having mass recording media such as hard disks, DVDs (Digital Versatile Disks) and so on have spread. Such recording apparatuses have a function of receiving a broadcasting program provided from a terrestrial digital broadcasting or a satellite digital broadcasting, compressing and coding a video signal and an audio signal of the received broadcasting program, storing the compressed and coded video and audio signals in a recording medium, reproducing the stored video and audio signals from the recording medium, and outputting the reproduced video and audio signals to a display and a speaker, respectively. In addition, such recording apparatuses have a reservation recording function for selecting a channel according to a schedule preset by a user and automatically recording a broadcasting program of the selected channel in the recording medium. However, as long as a recording apparatus does not have a function of recording a plurality of broadcasting programs simultaneously, if recording time zones of a plurality of reservation programs are set to overlap with each other, one of the reservation programs may be preferentially recorded. That is, there is a possibility of failure to record a reservation program desired by a user. Inventions to take measures against such failure are disclosed in, for example, Japanese Patent Application Publications Nos. 2001-197382 and 11-345446.

Japanese Patent Application Publication No. 2001-197382 discloses a receiving apparatus in which, if a plurality of reservation programs are reserved to overlap with each other in the same time zone, a user can preferentially record a reservation program having the highest priority based on priorities preset by the user. However, this receiving apparatus has a problem in that the user has to preset priorities for the plurality of reservation programs and this presetting procedure is troublesome to the user and puts mental stress on the user. In actuality, whenever a user adds a new reservation program, he/she needs to not only set priority of the added reservation program and but also reset priorities of reservation programs set in the past. In addition, as the number of reservation programs increases, the user is more likely to fail to set priorities for the reservation programs.

Japanese Patent Application Publication No. 11-345446 discloses a recording method in which user's taste is automatically learned based on information on user's viewing history without user's performing a troublesome setting operation, a program having high viewing possibility is determined based on a result of the learning, and the determined program is automatically reserved and recorded. In addition, this recording method makes it possible to determine one of programs which overlap with each other in their broadcasting time zones based on the result of the learning and automatically reserve and record the determined program. In other words, in this recording method, a program having the high viewing possibility is "predicted" based on the user's viewing history, and whether or not a reservation program desired by the user can be recorded depends greatly on prediction precision of the user's taste. However, it can not be said that the prediction precision is not always high and only one user uses a recording apparatus. For example, as the number of users, for example, children, men, women, old person, etc., who use one recording apparatus, becomes large, it becomes difficult to predict their taste.

In addition, a recording apparatus typically has a manual recording function of recording a broadcasting program being currently watched by a user when the user presses a recording button. When the recording apparatus records the broadcasting program, if the broadcasting program and a reservation program overlap with each other in their broadcasting time zones, one of both programs is preferentially recorded. For example, in some cases, if the user presses the recording button while the reservation program is being recorded, the recording of the reservation program stops and the broadcasting program starts to be recorded, or if reservation start time of the reservation program comes after the user starts to record the broadcasting program being currently watched by him/her, the recording apparatus stops the recording of the broadcasting program and then starts to record the reservation program.

However, in both cases, since the user may forget the reservation program and may have an illusion that the broadcasting program being currently watched by him/her is always preferentially recorded, it can not be concluded that a preferentially recorded program is a program desired by the user. For these cases, although the receiving apparatus disclosed in Japanese Patent Application Publication No. 2001-197382 can preset the priority of the reservation program, it is difficult to preset the priority of the broadcasting program being currently watched by the user and thus it is difficult for user to take proper measures against the above-mentioned problems. In addition, in the recording method disclosed in Japanese Patent Application Publication No. 11-345446, if the prediction precision of the user's taste is low, the recording apparatus fails to select the program desired by the user.

### Disclosure of the Invention

The present invention has made to overcome the above-mentioned problems, and it is an object of the invention to provide a recording apparatus and a recording method that are capable of reliably selecting and recording a program desired by a user of a broadcasting program that the user is currently watching and a reservation program. It is another object of the invention to provide a recording apparatus and a recording method that are capable of reliably selecting and recording a program desired by each user even when a plurality of users can use one recording apparatus.

In order to achieve the above objects, according to a first aspect of the invention, there is provided a recording apparatus that receives and records contents transmitted via a transmission line, including: a receiving unit that receives the contents; a recording unit that stores the contents in a recording medium; an input unit through which a recording start instruction of current contents that are being currently received by the receiving unit is inputted; a reservation-setting unit that determines whether reservation information of reservation contents that are likely to overlap with the current contents in terms of recording time zone is set, according to the recording start instruction, and if it is determined that the reservation information is set, generates a selection picture which urges a user to select one of the current contents and the reservation contents; a receiving control unit that controls the receiving unit to selectively receive one of the current contents and the reservation contents according to a selection instruction inputted to the input unit while displaying the selection picture; and a recording control unit that starts recording of the contents selectively received by the receiving unit in the recording unit.

According to a second aspect of the invention, there is provided a recording apparatus that receives and records contents transmitted via a transmission line, including: a receiving unit that simultaneously receives a plurality of contents transmitted via a plurality of transmission channels; a recording unit that stores the plurality of contents in a recording medium; an input unit through which a recording start instruction of one of current contents that are being currently received by the receiving unit is inputted; a reservation-setting unit that determines whether reservation information of reservation contents that are likely to overlap with the current contents in terms of recording time zone is set, according to the recording start instruction; a receiving control unit that controls the receiving unit to receive the current contents and the reservation contents simultaneously if the reservation-setting unit determines that the reservation information is set; and a recording control unit that simultaneously starts recording of the current contents and the reservation contents received by the receiving unit in the recording unit.

According to a third aspect of the invention, there is provided a recording method for receiving and recording contents transmitted via a transmission line, including the steps of: (a) receiving a recording start instruction of current contents that are being currently received; (b) determining whether reservation information of reservation contents that are likely to overlap with the current contents in terms of recording time zone is set, according to the recording start instruction; (c) if it is determined at the step (b) that the reservation information is set, generating a selection picture which urges a user to select one of the current contents and the reservation contents; (d) selectively receiving one of the current contents and the reservation contents according to a selection instruction inputted while displaying the selection picture; and (e) starting recording of the contents selectively received at the step (d) in a recording medium.

According to a fourth aspect of the invention, there is provided a recording method for receiving and recording contents transmitted via a transmission line, including the steps of: (a) receiving a recording start instruction of current contents that are being currently received; (b) determining whether reservation information of reservation contents that are likely to overlap with the current contents in terms of recording time zone is set, according to the recording start instruction; (c) if it is determined at the step (b) that the reservation information is set, simultaneously receiving the current contents and the reservation contents; and (d) simultaneously starting recording of the current contents and the reservation contents received at the step (c) in a recording medium.

### Brief Description of the Drawings

Fig. 1 is a block diagram schematically showing a recording and reproducing apparatus according to a mode for carrying out the present invention;
Fig. 2 is a flow chart schematically showing a sequence of reservation setting process;
Fig. 3 is a view showing an example of a warning picture;
Fig. 4 is a flow chart schematically showing a sequence of reservation recording process;
Fig. 5 is a flow chart schematically showing a process sequence of a reservation recording method according to a first embodiment of the invention;
Fig. 6 is a flow chart schematically showing a process sequence of normal recording;
Fig. 7 is a view showing an example of a selection picture;
Fig. 8 is a flow chart schematically showing a sequence of normal recording preferential process;
Fig. 9 is a flow chart schematically showing a sequence of reservation recording preferential process;
Fig. 10 is a flow chart schematically showing a process sequence of a reservation recording method according to a second embodiment of the invention;
Fig. 11 is a view showing an example of a selection picture;
Fig. 12 is a view showing an example of a selection picture;
Fig. 13 is a flow chart schematically showing a process sequence of a reservation recording method according to a third embodiment of the invention;
Fig. 14 is a block diagram schematically showing a recording and reproducing apparatus according to a fourth embodiment of the invention;
Fig. 15 is a flow chart schematically showing a process sequence of a reservation recording method according to the fourth embodiment of the invention;
Fig. 16 is a view showing an example of a notification picture; and
Fig. 17 is a view showing an example of a warning picture.

### Mode for Carrying Out the Invention

Hereinafter, several embodiments of the invention will be described.

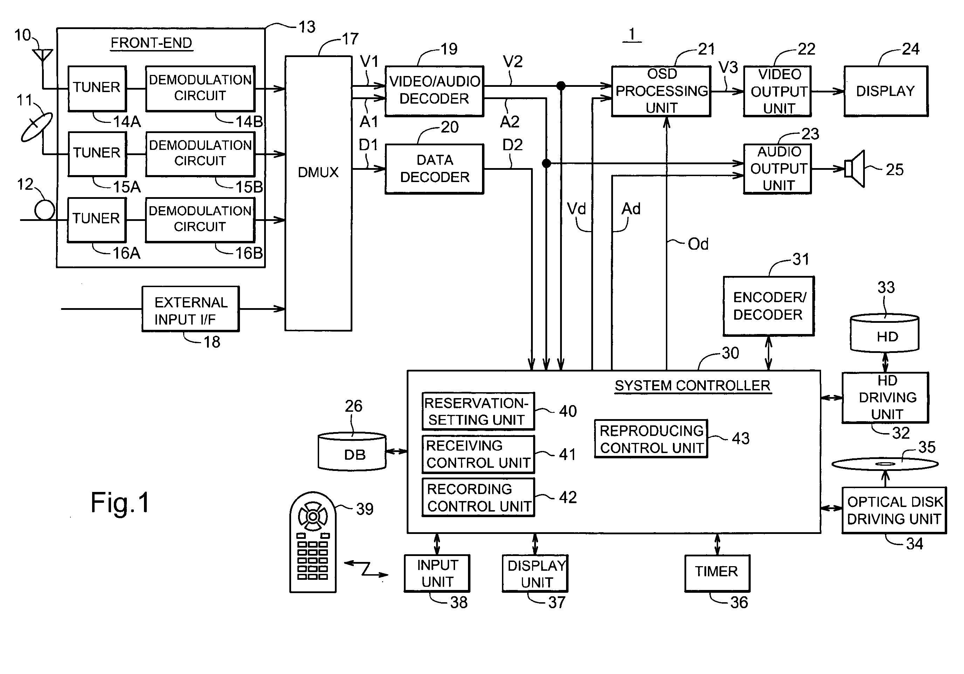

Fig. 1 is a block diagram schematically showing a recording and reproducing apparatus 1 according to a mode for carrying out the present invention. A recording and reproducing apparatus 1 includes a front-end 13, a separation circuit (DMUX) 17, an external input interface 18, a video/audio decoder 19, a data decoder 20, and a receiving unit that receives contents transmitted via a wireless transmission line or a wired transmission line by these components 13, 17, 18, 19 and 20. In the following embodiments, contents received will be illustrated with a television broadcasting program without being limited thereto.

In addition, the recording and reproducing apparatus 1 includes a system controller 30, an encoder/decoder 31, a hard disk driving unit 32, an optical disk driving unit 34, a timer 36, a display unit 37, an input unit 38 and a reservation information DB reservation information database) 26. The hard disk driving unit 32 has a function of recording a signal transmitted from the system controller 30 in a hard disk 33 and a function of reproducing a signal from the hard disk 33 and providing the reproduced signal to the system controller 30. The optical disk driving unit 34 has a function of recording a data signal transmitted from the system controller 30 in an optical disk 35 having high recording density, such as a DVD (Digital Versatile Disk) or the like, and a function of reproducing a signal from the optical disk 35 and providing the reproduced signal to the system controller 30. The hard disk driving unit 32 and the optical disk driving unit 34 form a recording unit. In the following embodiments, the hard disk 33 and the optical disk 35 are employed as a mass recording medium without being limited thereto.

The system controller 30 includes a microprocessor, a ROM (Read Only Memory), a RAM (Random Access Memory), a plurality of processors, an internal bus and an input/output interface. In the following embodiments, the system controller 30 includes a reservation-setting unit 40, a receipt control unit 41, a recording control unit 42 and a reproducing control unit 43 as its processors, all of which may be embodied by either hardware which can operate independent of the microprocessor or programs to be executed by the microprocessor, instead of hardware. The system controller 30 can individually control operation of all process blocks within the recording and reproducing apparatus 1.

In addition, the input unit 38 and the display unit 37 are connected to the system controller 30. The input unit 38 includes various kinds of input keys to allow a user to input instructions, switches and a pointing device. The display unit 37 is a small display device such as a liquid crystal display device or an EL (Electroluminescence) display device, and since an optically transparent touch panel is provided on a display screen of the display unit 37, a user can input instructions only by touching the display screen without using the input unit 38. In addition, since the input unit 38 can communicate with a remote controller 39 by wireless, the user can input instructions to the input unit 38 through the remote controller 39. The system controller 30 can control various operations according to the instructions inputted by the user through the input unit 38 and the display unit 37.

The front-end 13 has a structure that receives a broadcasting signal that propagates via the wireless transmission line or the wired transmission line. A receiving antenna 10, a tuner (channel selecting unit) 14A and a demodulation circuit 14B are provided for a terrestrial digital broadcasting, a parabola antenna 11, a tuner (channel selecting unit) 15A and a demodulation circuit 15B are provided for a satellite digital broadcasting, and a cable 12, a tuner (channel selecting unit) 16A and a demodulation circuit 16B are provided for a CATV (Cable Television). The tuners 14A and 14B select signals having particular frequency bands (i.e., select particular channels) from signals received from the receiving antenna 10 and the parabola antenna 11, respectively, and provide the selected signals to the demodulation circuit 14B and the demodulation circuit 15B, respectively. The demodulation circuits 14B and 15B perform A/D conversion or demodulation for input signals and provide resultant signals to the separation circuit 17. In addition, the CATV tuner 16A receives a signal that propagates via the cable 12 selects a signal having a particular frequency band (i.e. , selects a particular channel) from the received signal, provides the selected signal to the demodulation circuit 16B which then performs A/D conversion or demodulation for the selected signal. The frequency bands (transmission channels) selected by the tuners 14A, 15A and 16A are specified by the system controller 30. In the following embodiments, the front-end 13 includes three kinds of terrestrial digital broadcasting, satellite digital broadcasting and CATV without being limited thereto. For example, the front-end 13 may have a structure that can receive a transmission signal from a terrestrial analog broadcasting.

The external input interface 18 includes, for example, a network interface based on a serial transmission standard such as IEEE1394 standard, or a known LAN (Local Area Network) standard. The external input interface 18 may receive a signal transmittedvia a cable transmission line from an external device such as a digital video camera or the like, and provide a signal, which is obtained by performing modulation for the received signal, to the separation circuit 17. In addition, if the external input interface 18 is based on a network standard, it may receive a signal transmitted via an LAN or WAN (Wide Area Network), and provide a signal, which is obtained by performing modulation for the received signal, to the separation circuit 17.

The separation circuit 17 selects one of signals inputted from the front-end 13 and the external input interface 18 under control of the system controller 30 and separates the selected signal into a plurality of coded signals V1, A1 and D1. The video/audio decoder 19 is a decoder based on a high efficient compressing/expanding system such as an MPEG (Moving Picture Experts Group) system. The video/audio decoder 19 decodes the coded signal V1 to generate a video signal V2 and decodes the coded signal Alto generate an audio signal A2. The data decoder 20 decodes the coded signal D1 to generate a data signal D2 of auxiliary information such as an electronic program guide (EPG), captions and so on. The data signal D2 is supplied to the system controller 30. The electronic program guide is provided via digital broadcastings, CATVs and Internet.

An OSD (On-Screen Display) processing unit 21 superimposes an OSD signal Od from the system controller 30 on the video signal V2 from the video/audio decoder 19 to generate a superimposition signal V3 , and then provides the superimposing signal V3 to a video output unit 22. The video output unit 22 converts the superposition signal V3 into a signal in a predetermined display format, and transmits the signal having the predetermined display format to a display 24. On the other hand, an audio output unit 23 transmits the audio signal A2 from the video/audio decoder 19 to a speaker 25. As a result, since the display 24 displays a broadcasting program video and the speaker 25 outputs audio in synchronization with the video, a user can watch broadcasting programs provided via various transmission lines.

As described above, an operation mode in which the video and audio being currently received (current contents) are respectively provided to the display 24 and the speaker 25 is referred to as "television mode". The user can operate the remote controller 39 to switch an operation mode of the recording and reproducing apparatus 1 into the television mode.

In the following embodiments, the display 24 and the speaker 25 are not necessarily included in the recording and reproducing apparatus 1, but the display 24 and the speaker 25 may be external devices.

The video signal V2 and the audio signal A2 outputted from the video/audio decoder 19 are also transmitted to the system controller 30. The encoder/decoder 31 is configured by an encoder and a decoder based on a high efficient compressing/expanding system such as an MPEG system or the like. In the system controller 30, the recording control unit 42 provides the video signal V2 and the audio signal A2 to the encoder/decoder 31 in which the signals V2 and A2 are compressed and coded, according to a recording start instruction inputted by the user through the input part 38, and transmits the coded signals to the hard disk driving unit 32 or the optical disk driving unit 34. The hard disk driving unit 32 stores the transmitted coded signals in the hard disk 33 and the optical disk driving unit 34 stores the transmitted coded signals in the optical disk 35. Here, the recording control unit 42 may store the video signal V2 and the audio signal A2 in the hard disk 33 without the signals V2 and A2 being compressed and coded. In addition, the recording control unit 42 may read data stored in the hard disk 33 and write the read data into the optical disk 35.

The receiving control unit 41 controls a system to receive a program of a broadcasting channel specified by a user according to a channel selection instruction inputted by the user through the input unit 38. Specifically, the receiving control unit 41 may select a broadcasting channel according to a channel selection instruction, of channels of all broadcastings, such as terrestrial digital broadcastings, satellite digital broadcastings, CATV broadcastings, Internet broadcastings and so on, which can be received in the front-end 13 and the external input interface 18.

The reproducing control unit 43 reads data of broadcasting programs stored in the hard disk 33 or the optical disk 35 and outputs the read data to the display 24 and the speaker 25 according to a video reproduction instruction inputted by a user through the input unit 38. Specifically, the reproducing control unit 43 provides a video signal Vd and an audio signal Ad, which are read from the hard disk 33 or the optical disk 35 and then decoded, to the OSD processing unit 21 and the audio output unit 23, respectively. The OSD processing unit 21 superimposes the OSD signal Od on the video signal Vd to generate the superposition signal V3 and outputs the superposition signal V3 to the video output unit 22. On the other hand, the audio output unit 23 transmits the audio signal Ad to the speaker 25.

Here, an operation mode of the recording and reproducing apparatus 1 according to the video reproducing instruction is referred to as "video mode". In the video mode, instead of the video and audio being currently received, video and audio provided from the system controller 30 are supplied to the display 24 and the speaker 25, respectively.

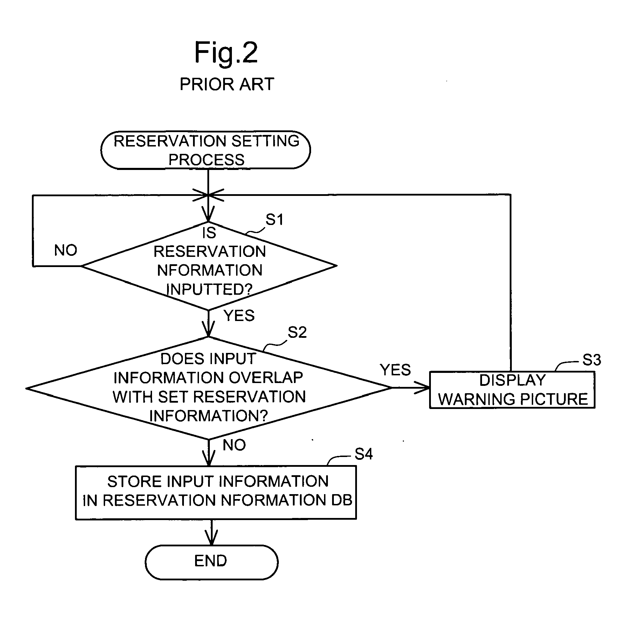

The reservation-setting unit 40 performs a recording reservation setting operation for a broadcasting program according to an instruction inputted by a user through the input unit 38. Hereinafter, a sequence of normal reservation setting process will be described with reference to a flow chart of Fig. 2.

If an operation mode of a system is a recording reservation mode, the reservation-setting unit 40 waits until input of reservation information is completed (Step S1). At this time, since a reservation setting menu (not shown) is displayed on the display 24, a user can input the reservation information such as a reservation program channel, a recording scheduled date, a recording start time, a recording end time, a video quality mode, a recording place (recording medium) and so on by operating the remote controller 39 while confirming a display screen of the display 24. The inputted reservation information (hereinafter referred to as input information) is temporarily stored in an internal memory (not shown) of the system controller 30.

Here, the user can simply input the reservation information by inputting a code string such as G code (registered trademark). This kind of code string, which refers to coding the reservation information into a numerical string or a character string, is published in television program guides of newspapers or magazines. In addition, since the recording and reproducing apparatus 1 displays an electronic program guide on the display 24 or the display unit 37, a user can input the reservation information by operating the remote controller 39 while confirming the displayed electronic program guide. The electronic program guide can be acquired from the data signal D2 decoded by the data decoder 20 (see Fig. 1).

After completion of input of the reservation information, the reservation-setting unit 40 determines whether or not the input information overlaps with set reservation information at Step S2. Specifically, since the set reservation information is stored in the reservation information DB 26, the reservation-setting unit 40 determines whether or not a recording time zone of a program included in the input information overlaps with a recording time zone of a reservation program included in the set reservation information by referring to the reservation information DB 26.

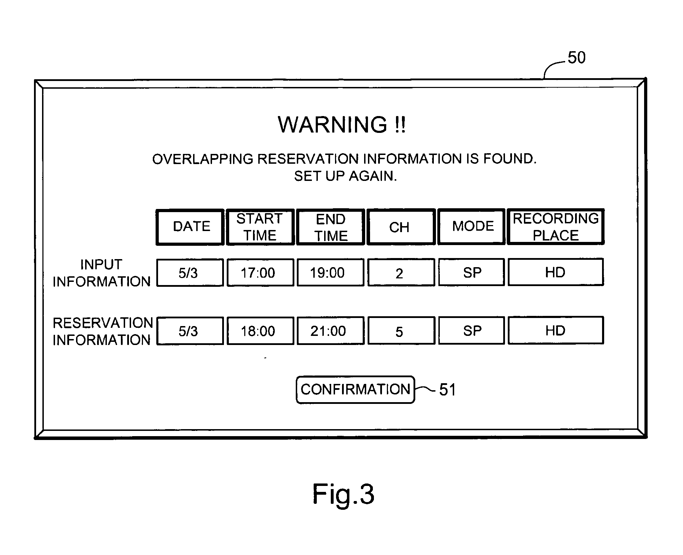

If it is determined that the input information overlaps with the set reservation information, the process proceeds to Step S3 where the reservation-setting unit 40 generates a warning picture 50 as shown in Fig. 3 and supplies the video signal Vd of the warning picture 50 to the OSD processing unit 21. The OSD processing unit 21 transmits the video signal Vd to the video output unit 22. As a result, the warning picture 50 is displayed on the display 24, thereby informing the user that there exists the reservation information overlapping with the input information in terms of recording time zone.

Referring to Fig. 3, the warning picture 50 includes a warning message, contents of the input information and contents of the set reservation information overlapping with the input information. The input information and the set reservation information include, as its contents, "date" (recording scheduled date), "start time" (recording start time), "end time" (recording end time), "channel" (channel number), "mode" (video quality mode) and "recording place" (recording medium). The video quality mode may be one selected from three modes; a high quality mode (FINE), a standard quality mode (SP) and an extended recording mode (EP). In Fig. 3, the standard quality mode (SP) is selected for both of the input information and the set reservation information.

After confirming the warning picture 50 displayed on the display 24, if the user operates the remote controller 39 to specify a confirmation button 51, the warning picture 50 disappears and the reservation setting menu appears again. Then, the process returns to the Step S1. On the other hand, if it is determined that the input information does not overlap with the set reservation information, the reservation-setting unit 40 stores (registers) the input information, which is stored in the internal memory, in the reservation information DB 26 (Step S4). Then, the recording reservation setting operation is ended.

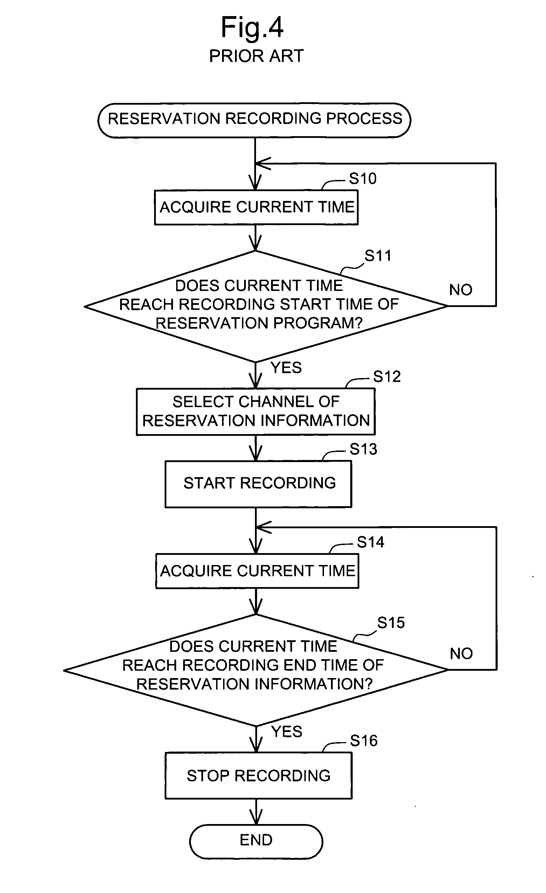

Next, a reservation recording process based on the set reservation information will be described with reference to Fig. 4. Fig. 4 is a flow chart schematically showing a sequence of normal reservation recording process.

If the system is in a normal reservation-recording mode, the reservation-setting unit 40 acquires current time (Step S10). Specifically, the timer 36 that supplies time information indicating the current time (including date) is connected to the system controller 30, and the reservation-setting unit 40 can acquire the time information by referring to the timer 36.

Next, the reservation-setting unit 40 determines whether or not the acquired current time reaches the recording start time of the set reservation program (Step S11). If it is determined that the current time does not reach the recording start time, the process returns to the Step S10. On the other hand, if it is determined that the current time reaches the recording start time, the receiving control unit 41 controls the front-end 13 or the external input interface 18 to select a broadcasting channel of the reservation information according to a request from the reservation-setting unit 40 (Step S12). The video/audio decoder 19 supplies the video signal V2 and the audio signal A2 of a program of the selected channel to the system controller 30.

Next, according to a request from the reservation-setting unit 40, the recording control unit 42 controls the encoder/decoder 31 to compress and code the video signal V2 and the audio signal A2 in real time, and then starts to record the coded signals into the recording medium specified as "recording place" (Step S13).

Thereafter, the reservation-setting unit 40 acquires current time from the timer 36 (Step S14) and determines whether or not the current time reaches the recording end time of the set reservation information (Step S15). If it is determined that the current time does not reach the recording end time, the process returns to the Step S14. On the other hand, if it is determined that the current time reaches the recording end time, the recording control unit 42 stops the recording of the reservation program (Step S16). Then, the reservation recording process is ended.

### 1. First Embodiment

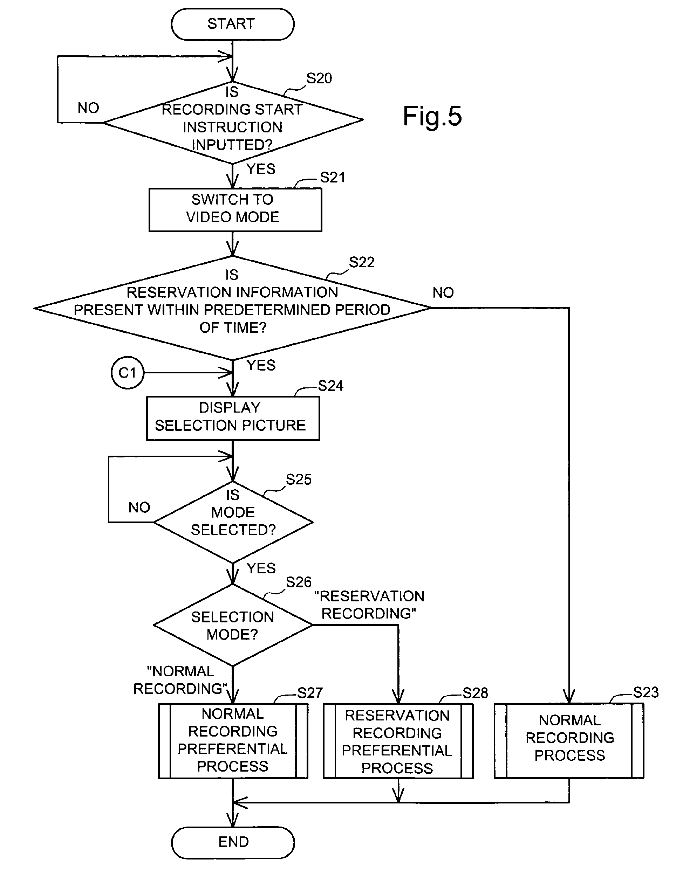

Next, a reservation recording method according to a first embodiment of the invention will be described with reference to Fig. 5. Fig. 5 is a flow chart schematically showing a process sequence of a reservation recording method according to a first embodiment of the invention. On the assumption that a user has already completed to set a reservation program and is watching and hearing a broadcasting program, which is being currently selected and received, using the display 24 and the speaker 25, the process sequence of the reservation recording method is described as follows.

Referring to Fig. 5, the reservation-setting unit 40 monitors whether or not a recording start instruction is inputted by a user through the input unit 38, and waits until the recording start instruction is detected (Step S20). If the user presses a recording button of the remote controller 39 to record a broadcasting program being watched by him/her, the reservation-setting unit 40 detects the pressing to determine that the recording start instruction is present, and then switches an operation mode of the system from the television mode to the video mode (Step S21). As described above, the operation mode of the system includes "television mode" and "video mode", the television mode refers to a mode in which a user watches and hears a broadcasting program, which is being currently selected and received, using the display 24 and the speaker 25, and the video mode refers to a mode in which the user watches and hears video and audio supplied from the system controller 30, instead of the broadcasting program.

Next, at Step S22, the reservation-setting unit 40 acquires current time from the timer 36 and determines whether or not the recording start time of the reservation program is present as reservation information within a predetermined period of time from the current time by referring to the reservation information DB 26. That is, it is determined whether or not there is set the reservation information of the reservation program that is likely to overlap with the broadcasting program, which is being currently selected and received, in terms of recording time zone. "Predetermined period of time" may be set to be a time interval desired by the user, for example, 30 minutes or one hour.

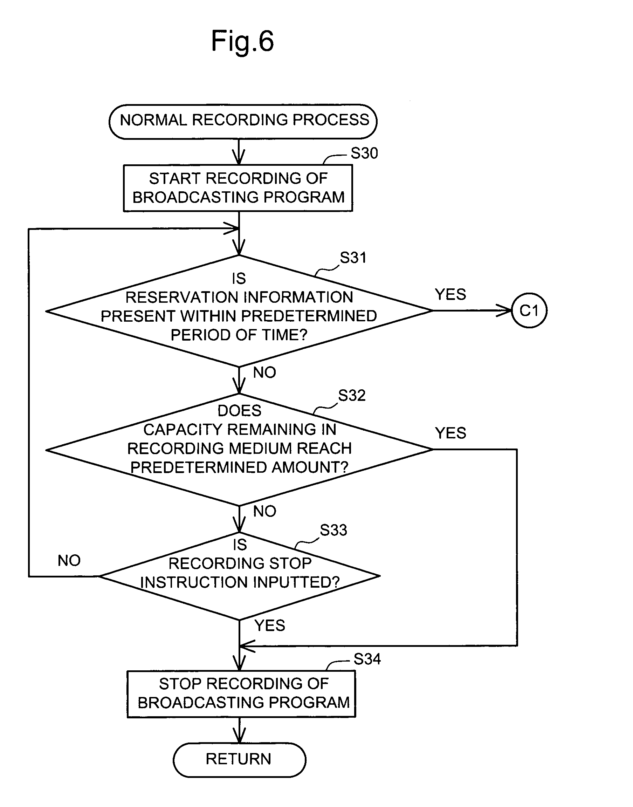

If it is determined at the Step S22 that the reservation information is not present, the recording control unit 42 performs a normal recording operation according to a request from the reservation-setting unit 40 (Step S23). Fig. 6 is a flow chart schematically showing a process sequence of the normal recording operation. Referring to Fig. 6, the recording control unit 42 controls the encoder/decoder 31 to compress and code the video signal V2 and the audio signal A2, which are supplied from the video/audio decoder 19, in real time, and then starts to record the coded signals into the recording medium specified as "recording place" (Step S30).

Thereafter, the reservation-setting unit 40 acquires current time from the timer 36 and determines whether or not the recording start time of the reservation program is present as reservation information within a predetermined period of time from the current time by referring to the reservation information DB 26 (Step S31). If it is determined that the reservation information is present, the process proceeds to a main routine (Fig. 5) through a connector C1 and Step S24 is performed. Step 24 is described below. On the other hand, if it is determined that the reservation information is not present, the recording control unit 42 determines whether or not capacity remaining in the recording medium is less than a predetermined amount (Step S32). If it is determined that the capacity is less than the predetermined amount, the recording operation is stopped (Step S34). On the other hand, if it is determined that the capacity is less than the predetermined amount, the recording control unit 42 determines whether or not a recording stop instruction inputted by a user through the input unit 38 is present (Step S33). If it is determined that the recording stop instruction is not present, the recording control unit 42 returns the process to the Step S31. On the other hand, if the user presses a recording stop button of the remote controller 39 to stop the recording of the broadcasting program being watched by him/her, the recording control unit 42 detects the pressing to determine that there exists the recording stop instruction and stops the recording of the broadcasting program (Steps S33 and S34). Thereafter, the process returns to the main routine (Fig. 5) and then the recording process is ended.

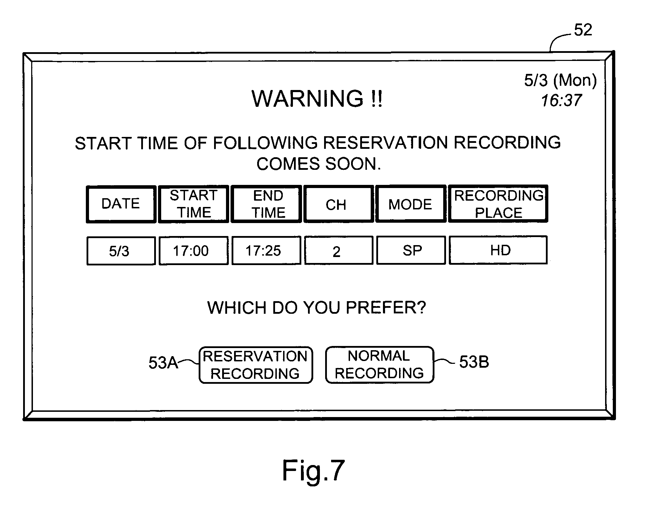

Referring to Fig. 5 again, if it is determined at the Step S22 that the reservation information is present, the reservation-setting unit 40 generates a selection picture 52 as shown in Fig. 7 and supplies the video signal Vd of the selection picture 52 to the OSD processing unit 21. The OSD processing unit 21 transmits the video signal Vd to the video output unit 22. As a result, the selection picture 52 is displayed on the display 24 (Step S24), thereby informing the user of the presence of the reservation program that is likely to overlap with the broadcasting program, which is being currently selected and received, in terms of recording time zone. At this time, the reservation-setting unit 40 may generate a warning sound for warning the user and supply the generated warning sound to the speaker 25 through the audio output unit 23. As a result, the speaker 25 outputs the warning sound at the same time of displaying the selection picture 52.

Referring to Fig. 7, the selection picture 52 includes a warning message and contents of the reservation information. In addition, selection buttons 53A and 53B in the selection picture 52 are provided to urge the user to select one of a recording mode of the reservation program (reservation-recording mode) and a recording mode of the broadcasting program (normal recording mode) being currently selected and received. The reservation-recording mode is selected when the selection button 53A in the left is pressed while the normal recording mode is selected when the selection button 53B in the right is pressed. The reservation-setting unit 40 waits until a selection instruction to select one of the above modes is inputted to the reservation-setting unit 40 through the input unit 38 (Step S25).

After confirming the selection picture 52 displayed on the display 24, if the user operates the remote controller 39 to specify the selection button 53B, the reservation-setting unit 40 determines that the normal recording mode is selected (Step S26) and makes the recording control unit 42 perform a normal recording preferential process (Step S27). In the normal recording preferential process, the recording control unit 42 starts to record the broadcasting program, which is being currently received, in preference to the reservation program.

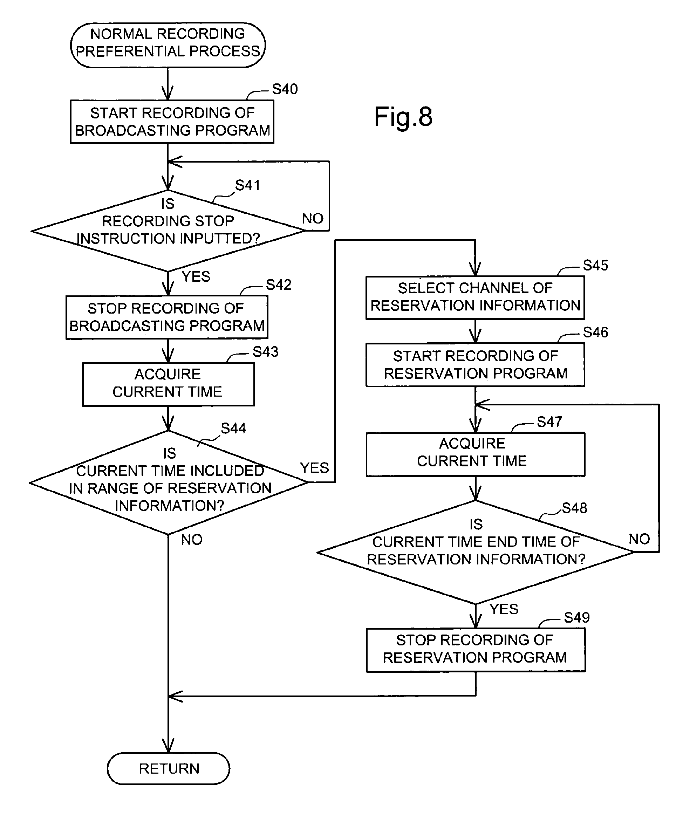

Fig. 8 is a flow chart schematically showing a sequence of normal recording preferential process. Referring to Fig. 8, according to a request from the reservation-setting unit 40, the recording control unit 42 controls the encoder/decoder 31 to compress and code the video signal V2 and the audio signal A2, which are supplied from the video/audio decoder 19, in real time, and then starts to record the coded signals into the recording medium specified as "recording place" (Step S40). Thereafter, the recording control unit 42 determines whether or not a recording stop instruction inputted by a user through the input unit 38 is present, and waits until the recording stop instruction is detected (Step S41). If the user presses the recording stop button of the remote controller 39 to stop the recording of the broadcasting program being watched by him/her, the recording control unit 42 detects the pressing to determine that there exists the recording stop instruction and stops the recording of the broadcasting program (Step S42).

Subsequently, the reservation-setting unit 40 acquires current time (stop time) from the timer 36 (Step S43) and determines whether or not the current time falls within the range of the reservation information DB 26, that is, whether or not the stop time is included in a recording scheduled time zone from the recording start time of the reservation program to the recording end time thereof (Step S44). If the user presses the recording stop button of the remote controller 39 before the recording start time of the reservation program or after the recording end time thereof, the reservation-setting unit 40 determines that the stop time is out of the range of the reservation information (Step S44), ends the normal recording preferential process and returns the process to the main routine (Fig. 5), and then the recording process is ended. On the other hand, if the user presses the recording stop button of the remote controller 39 before the recording end time of the reservation program from the recording start time thereof, the reservation-setting unit 40 determines that the current time falls within the range of the reservation information (Step S44), and then the process proceeds to Step S45.

In Steps S45 to S49 , a reservation recording process is performed. That is, the receiving control unit 41 makes the front-end 13 or the external input interface 18 select a channel of the reservation program (Step S45). The video/audio decoder 19 supplies the video signal V2 and the audio signal A2 of the program of the selected channel to the system controller 30. Next, according to a request from the reservation-setting unit 40, the recording control unit 42 controls the encoder/decoder 31 to compress and code the video signal V2 and the audio signal A2 in real time, and then starts to record the coded signals into the recording medium specified as "recording place" (Step S46).

Thereafter, the reservation-setting unit 40 acquires current time from the timer 36 (Step S47) and determines whether or not the acquired current time reaches the recording end time of the reservation information (Step S48). If it is determined that the current time does not reach the recording end time, the process returns to the Step S47. On the other hand, if it is determined that the current time reaches the recording end time, the recording control unit 42 stops the recording of the reservation program (Step S49). Thereafter, the process returns to the main routine (Fig. 5), and then the recording process is ended.

In the Step S26 , after confirming the selection picture 52 displayed on the display 24, if the user operates the remote controller 39 to specify the selection button 53A, the reservation-setting unit 40 determines that the reservation-recording mode is selected and makes the recording control unit 42 perform a reservation recording preferential process (Step S28). In the reservation recording preferential process, the recording control unit 42 starts to record the reservation program in preference to the broadcasting program.

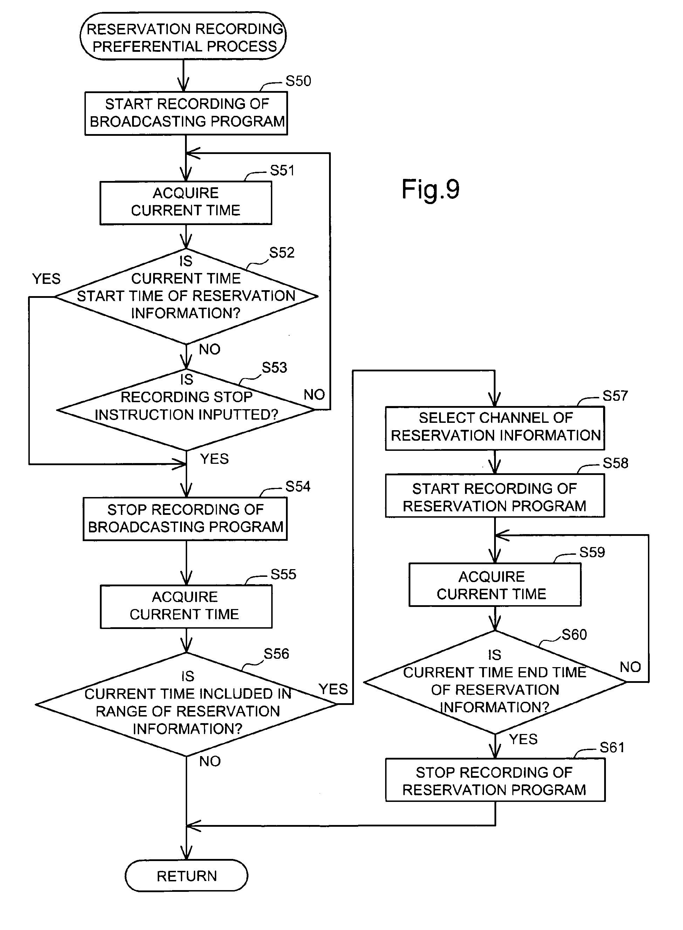

Fig. 9 is a flow chart schematically showing a sequence of reservation recording preferential process. Referring to Fig. 9, according to a request from the reservation-setting unit 40, the recording control unit 42 controls the encoder/decoder 31 to compress and code the video signal V2 and the audio signal A2, which are supplied from the video/audio decoder 19, in real time, and then starts to record the coded signals into the recording medium specified as "recording place" (Step S50).

Thereafter, the reservation-setting unit 40 acquires current time from the timer 36 (Step S51) and determines whether or not the current time reaches the recording start time of the reservation information by referring to the reservation information DB 26 (Step S52). If the reservation-setting unit 40 determines that the current time does not reach the recording start time, the recording control unit 42 determines whether or not a recording stop instruction inputted by a user through the input unit 38 is present, and waits until the recording stop instruction is detected (Step S53). If the user presses the recording stop button of the remote controller 39 to stop the recording of the broadcasting program being watched by him/her, the recording control unit 42 detects the pressing to determine that there exists the recording stop instruction and stops the recording of the broadcasting program (Step S54). On the other hand, if the reservation-setting unit 40 determines that the current time reaches the recording start time (Step S52), the recording control unit 42 stops the recording of the broadcasting program (Step S54).

Subsequently, the reservation-setting unit 40 acquires current time (stop time) from the timer 36 (Step S55) and determines whether or not the current time falls within the range of the reservation information DB 26, that is, whether or not the stop time is included in a recording scheduled time zone from the recording start time of the reservation program to the recording end time thereof (StepS56). If the user presses the recording stop button of the remote controller 39 before the recording start time of the reservation program, the reservation-setting unit 40 determines that the stop time is out of the range of the reservation information (Step S56), ends the reservation recording preferential process and returns the process to the main routine (Fig. 5), and then the recording process is ended. On the other hand, if the current time is included in the recording scheduled time zone of the reservation program, the reservation-setting unit 40 determines that the current time falls within the range of the reservation information (Step S56), and then the process proceeds to Step S57.

In Steps S57 to S61, a reservation recording process is performed. That is, the receiving control unit 41 makes the front-end 13 or the external input interface 18 select a channel of the reservation program (Step S57). The video/audio decoder 19 supplies the video signal V2 and the audio signal A2 of the program of the selected channel to the system controller 30. Next, according to a request from the reservation-setting unit 40, the recording control unit 42 controls the encoder/decoder 31 to compress and code the video signal V2 and the audio signal A2 in real time, and then starts to record the coded signals into the recording medium specified as "recording place" (Step S58).

Thereafter, the reservation-setting unit 40 acquires current time from the timer 36 (Step S59) and determines whether or not the acquired current time reaches the recording end time of the reservation information (Step S60). If it is determined that the current time does not reach the recording end time, the process returns to the Step S59. On the other hand, if it is determined that the current time reaches the recording end time, the recording control unit 42 stops the recording of the reservation program (Step S61). Thereafter, the process returns to the main routine (Fig. 5), and then the recording process is ended.

As described above, in the reservation recording method according to the first embodiment, when the user tries to record the broadcasting program being currently received (current contents), it is determined whether or not the reservation program (reservation contents) which is likely to overlap with the broadcasting program in terms of recording time zone (Step S22) is present, and if it is determined that the reservation program is present, the fact is indicated by display of the selection picture 52, thereby informing the user of the fact (Step S24). Accordingly, since the user can confirm the presence of the reservation program when he/she tries to record the broadcasting program being currently received, he/she can determine immediately which of the reservation program and the broadcasting program being currently received is to be recorded, and thus can determine priorities of the broadcasting program and the broadcasting program. Accordingly, even when the user forgets the reservation program at the moment when he/she presses the recording button, or set a plurality of reservation programs, he/she can set a recording schedule of a desired program when he/she tries to record the broadcasting program being currently received, thereby preventing the recording of the reservation program from being invalidated due to the recording of the broadcasting program.

In addition, if the user selects the broadcasting program being currently received, the broadcasting program is recorded in preference to the reservation program (Steps S40 to S42 in Fig. 8), and after the recording of the broadcasting program is completed, the reservation program is automatically recorded (Steps S43 to S49). That is, even when the broadcasting program is preferentially selected, the recording of the reservation program starts immediately after the user presses the recording stop button to stop the recording of the broadcasting program.

On the other hand, if the user selects the reservation program, when the recording start time of the reservation program comes while the broadcasting program being currently received is being recorded, the recording of the broadcasting program is stopped and the reservation program is recorded in preference to the broadcasting program (Steps S50 to S61 in Fig. 9). Accordingly, even when the user selects the reservation program, the broadcasting program from the current time to the recording start time of the reservation program can be simply and conveniently recorded.

Moreover, when the user presses the recording button, since the operation mode of the system is forced to change from the television mode to the video mode (Step S21), it is possible to reliably inform the user of the selection picture 52 (Fig. 7). As described above, the operation mode of the system includes two modes of "television mode" and "video mode". If the process has no Step S21, even if the user presses the recording button when the system is in the television mode, the display 24 may not display the selection picture 52 showing the broadcasting program, which is being currently received, as it is. In this case, the user is not informed of the selection picture 52 and thus has a risk of not being aware of the presence of the reservation program. However, in this embodiment, since the operation mode of the system is forced to change from the television mode to the video mode as the user presses the recording button, it is possible to reliably inform the user of the selection picture 52.

There also exists "superimposition mode" to replace the forced switching from the television mode to the video mode. If the user operates the remote controller 39 to select the superimposition mode, the Step S21 skips, and in the Step S24 , the reservation-setting unit 40 generates the selection picture 52 as shown in Fig. 7 and supplies the OSD signal Od of the selection picture 52 to the OSD processing unit 21. The OSD processing unit 21 superimposes the OSD signal Od on the video signal V2 from the video/audio decoder 19 and supplies the superimposition signal V3 to the video output unit 22. As a result, in the display 24, since the selection picture 52 superimposed on the broadcasting program being currently selected and received, the user can confirm the selection picture 52 while watching the broadcasting program.

### 2. Modification of First Embodiment

Hereinafter, a modification of the first embodiment will be described. In the Step S22, the reservation-setting unit 40 determines whether or not the recording start time of the reservation program is present as the reservation information within the predetermined period of time from the current time. If it is determined that the reservation information is present, one of the normal recording preferential process (Step S27) and the reservation recording preferential process (Step S28) is performed. However, if the capacity remaining in the recording medium as the recording place, such as a hard disk or the like, is small, since capacity remaining before the completion of the recording of the reservation program becomes very small, the reservation program may fail to be recorded. To avoid this, it is preferable to predict capacity required for the recording medium before the recording operation starts and determine in advance whether or not the recording medium has the predicted capacity.

Specifically, if it is determined that the reservation program is present (Step S22), before the selection picture is displayed (Step S24), the reservation-setting unit 40 calculates capacity required for the recording from the current time to the recording end time of the reservation program (hereinafter referred to as required capacity). Here, the required capacity is calculated in consideration of recording time of broadcasting programs or reservation programs which are likely to be recorded, and video quality modes (FINE, SP and EP). This is because the required capacity is varied depending on video quality. In addition, it is determined whether or not the remaining capacity of the recording medium exceeds the required capacity.

If the required capacity is sufficient, the Steps S24 to S28 may be performed as described above. On the other hand, if the required capacity is insufficient, for example, the user may be informed of the selection picture as shown in Fig. 7, including a warning message indicating the insufficiency (Step S24). The user may select one of the reservation-recording mode and the normal recordingmode while confirming the selection picture.

In addition, if the required capacity is insufficient, the recording control unit 42 may perform only the recording of the reservation program without performing the normal recording preferential process (Step S27) or the reservation recording preferential process (StepS28). As described above, in the normal recording preferential process (Step S27) or the reservation recording preferential process (Step S28), since the recording of the broadcasting program necessarily starts (Steps S40 and S50), the capacity of the recording medium is consumed. If the required capacity is insufficient, it becomes possible to extend recording time of the reservation program to the maximum by starting the reservation recording process as shown in Fig. 4, without starting the recording of the broadcasting program. In addition, if the required capacity is insufficient, the recording control unit 42 may extend recording time of the broadcasting program to the maximum by performing only the recording of the broadcasting program without performing the normal recording preferential process (Step S27) or the reservation recording preferential process (Step S28). In the Step S24, for example, the user may be informed of a message to urge the user to select this process.

### 3. Second Embodiment

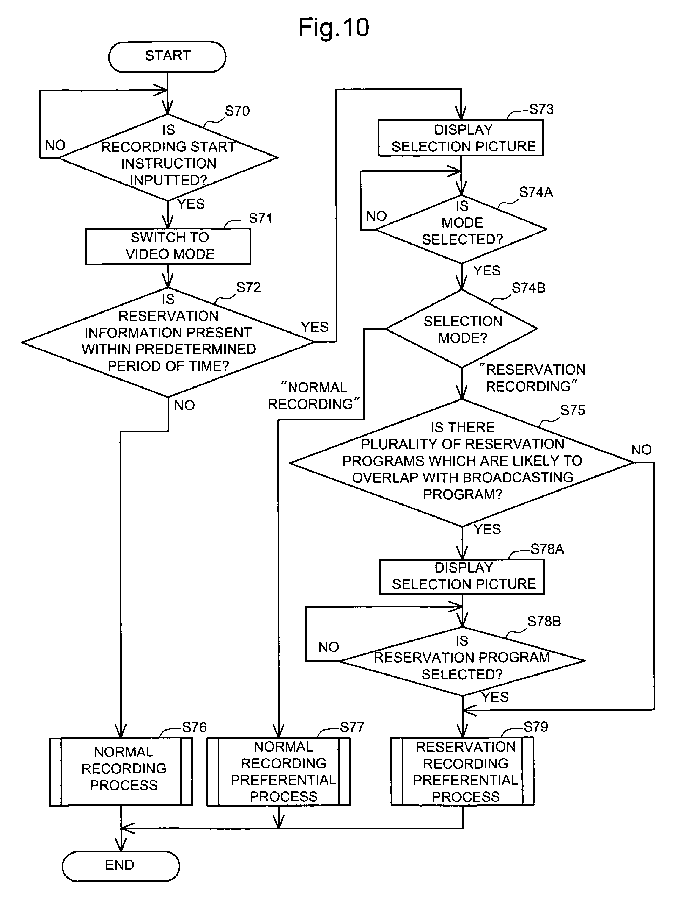

Next, a reservation recording method according to a second embodiment of the invention will be described. Fig. 10 is a flow chart schematically showing a process sequence of a reservation recording method according to a second embodiment of the invention. On the assumption that a user has already completed to set a reservation program and is watching and hearing a broadcasting program, which is being currently selected and received, using the display 24 and the speaker 25, the process sequence of the reservation recording method is described as follows.

Referring to Fig. 10, the reservation-setting unit 40 monitors whether or not a recording start instruction is inputted by a user through the input unit 38, and waits until the recording start instruction is detected (Step S70). If the user presses a recording button of the remote controller 39 to record a broadcasting program being watched by him/her, the reservation-setting unit 40 detects the pressing to determine that the recording start instruction is present, and then switches an operation mode of the system from the television mode to the video mode (Step S71).

Next, at Step S72, the reservation-setting unit 40 acquires current time from the timer 36 and determines whether or not the recording start time of the reservation program is present as reservation information within a predetermined period of time from the current time by referring to the reservation information DB 26. If it is determined that the reservation information is not present, the recording control unit 42 performs a normal recording operation according to a request from the reservation-setting unit 40 (Step S76). This normal recording operation is performed according to the sequence as shown in Fig. 6.

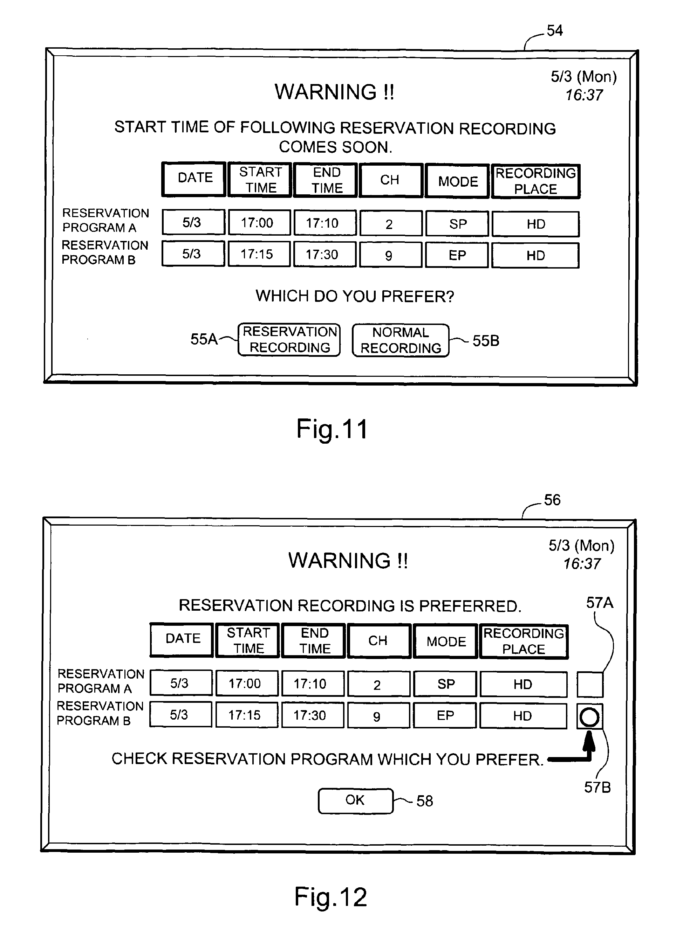

On the other hand, if it is determined at the Step S72 that the reservation information is present, the reservation-setting unit 40 generates a selection picture 54 as shown in Fig. 11 and supplies the video signal Vd of the selection picture 54 to the OSD processing unit 21., The OSD processing unit 21 transmits the video signal Vd to the video output unit 22. As a result, the selection picture 54 is displayed on the display 24 (Step S73), thereby informing the user of the presence of the reservation program that is likely to overlap with the broadcasting program, which is being currently selected and received, in terms of recording time zone. At this time, the reservation-setting unit 40 may generate a warning sound for warning the user and supply the generated warning sound to the speaker 25 through the audio output unit 23.

Referring to Fig. 11, the selection picture 54 includes a warning message and contents of the reservation information. While the selection picture 52 as shown in Fig. 7 has setting contents of one reservation program, the selection picture 54 as shown in Fig. 11 has setting contents of two reservation programs. In addition, selection buttons 55A and 55B in the selection picture 54 are provided to urge the user to select one of a recording mode of the reservation programs (reservation-recording mode) and a recording mode of the broadcasting program (normal recording mode) being currently selected and received. The reservation-recording mode is selected when the selection button 55A in the left is pressed while the normal recording mode is selected when the selection button 55B in the right is pressed. The reservation-setting unit 40 waits until a selection instruction to select one of the above modes is inputted to the reservation-setting unit 40 through the input unit 38 (Step S74A).

After confirming the selection picture 54 displayed on the display 24, if the user operates the remote controller 39 to specify the selection button 53B in the right, the reservation-setting unit 40 determines that the normal recording mode is selected (Step S74B) and makes the recording control unit 42 perform a normal recording preferential process (Step S77). This normal recording preferential process is performed according to the sequence as shown in Fig. 8.

On the other hand, after confirming the selection picture 54 displayed on the display 24, if the user operates the remote controller 39 to specify the selection button 55A in the left, the reservation-setting unit 40 determines at the Step S74B that the reservation-recording mode is selected. Subsequently, the reservation-setting unit 40 determines whether or not there exist a plurality of reservation programs which are likely to overlap with the broadcasting program, which is being currently selected and received, in terms of recording time zone (Step S75). If it is determined that there exists no plurality of reservation programs, the reservation-setting unit 40 makes the recording control unit 42 perform the reservation recording preferential process (Step S79). This reservation recording preferential process is performed according to the sequence as shown in Fig. 9.

If it is determined that there exists the plurality of reservation programs (Step S75), the reservation-setting unit 40 generates a selection picture 56 as shown in Fig. 12 and supplies the video signal Vd or the OSD signal Od of the selection picture 56 to the OSD processing unit 21. The OSD processing unit 21 transmits the video signal Vd to the video output unit 22 and gives the OSD signal Od superimposed on the video signal V2 to the video output unit 22. As a result, the selection picture 56 is displayed on the display 24 (Step S78A).

Referring to Fig. 12, the selection picture 56 includes a warning message, contents of the reservation information, and check boxes 57A and 57B (preference mark) for selecting one of reservation programs A and B. The user may operate the remote controller 39 to specify one of the check boxes while viewing the selection picture 56. The reservation program A is selected by specifying the check box 57A and the reservation program B is selected by specifying the check box 57B. The reservation-setting unit 40 waits until a selection instruction to select one of the reservation programs is inputted to the reservation-setting unit 40 through the input unit 38 (Step S78B). If the user determines priority by specifying the check boxes and then presses a confirmation button 58, the selection instruction is outputted from the input unit 38 to the reservation-setting unit 40 which then makes the recording control unit 42 perform the reservation recording preferential process (Step S79). When the selection picture 56 is displayed, if none of the check boxes 57A and 57B is specified by the user, the normal recording process (Step S76) may be performed.

As described above, in the reservation recording method according to the second embodiment, if the user tries to record the broadcasting program being currently received, even when there exist a plurality of reservation programs which are likely to overlap with the broadcasting programs in terms of recording time zone, it is possible to select a desired one of these reservation programs and the broadcasting program and set a recording schedule of the selected program quickly and simply.

### 4. Third Embodiment

Next, a reservation recording method according to a third embodiment of the invention will be described. The reservation recording method according to this embodiment is to realize an efficient recording schedule using EPG (Electronic Program Guide) information. The EPG information is multiplexed with broadcasting electromagnetic waves or is provided through Internet, and the system controller 30 may acquire the EPG information from the data signal D2 decoded by the data decoder 20. The system controller 30 stores the acquired EPG information in the reservation information DB 26. Some of the reservation information DB 26 forms an electronic program database that stores the EPG information.

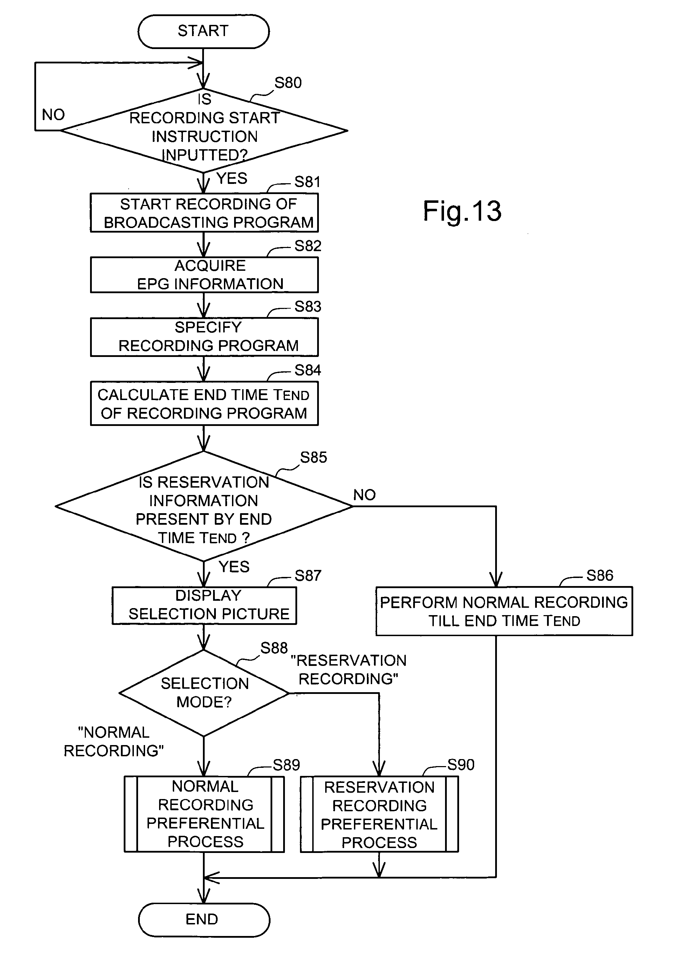

Fig. 13 is a flow chart schematically showing a process sequence of a reservation recording method according to the third embodiment of the invention. On the assumption that a user has already completed to set a reservation program and is watching and hearing a broadcasting program, which is being currently selected and received, using the display 24 and the speaker 25, the process sequence of Fig. 13 is described as follows.

The reservation-setting unit 40 monitors whether or not a recording start instruction is inputted by a user through the input unit 38, and waits until the recording start instruction is detected (Step S80). If the user presses a recording button of the remote controller 39 to record a broadcasting program being watched by him/her, the reservation-setting unit 40 detects the pressing to determine that the recording start instruction is present. The recording control unit 42 starts a normal recording operation according to the recording start instruction (Step S81). In parallel with this normal recording, the reservation-setting unit 40 acquires EPG information by referring to the electronic information database in the reservation information DB 26 according to the recording start instruction (Step S82), and specifies a broadcasting program to be recorded (hereinafter referred to as a recording program) based on the EPG information (Step S83).

Next, the reservation-setting unit 40 calculates recording end time T_{END} of the recording program based on the EPG information (Step S84), and determines whether or not reservation information is present within a time zone from current time to the recording end time T_{END}, that is, whether or not the time zone from the current time to the recording end time T_{END} overlaps with a recording time zone of the reservation program, by referring to the reservation information DB 26 (Step S85). If it is determined that the reservation information is not present (Step S85), the recording control unit 42 performs the normal recording operation by the recording end time T_{END} (Step S86).

On the other hand, if it is determined that the reservation information is present (Step S85), the reservation-setting unit 40 generates the selection picture as shown in Fig. 7 and supplies the video signal Vd or the OSD signal Od of the selection picture to the OSD processing unit 21. The OSD processing unit 21 transmits the video signal Vd to the video output and gives the OSD signal Od superimposed on the video signal V2 to the video output unit 22. As a result, the selection picture is displayed on the display 24 (Step S87), thereby informing the user of the presence of the reservation program that is likely to overlap with the broadcasting program, which is being currently recorded, in terms of recording time zone. At this time, the reservation-setting unit 40 may generate a warning sound for warning the user and supply the generated warning sound to the speaker 25 through the audio output unit 23.

The reservation-setting unit 40 waits until a selection instruction to select one of the reservation-recording mode and the normal recording mode is inputted to the reservation-setting unit 40 through the input unit 38 (Step S88). After confirming the selection picture displayed on the display 24, if the user operates the remote controller 39 to specify the normal recording mode, the reservation-setting unit 40 determines that the normal recording mode is selected (Step S88) and makes the recording control unit 42 perform the normal recording preferential process as shown in Fig. 8 (Step S89). On the other hand, if the user specifies the reservation-recording mode, the reservation-setting unit 40 determines that the reservation-recording mode is selected (Step S88) and makes the recording control unit 42 perform the reservation recording preferential process as shown in Fig. 9 (Step S90). Then, the recording process is ended.

As described above, in the reservation recording method according to the third embodiment, since the recording end time T_{END} of the recording program is calculated based on the EPG information (Step S84) and based on the recording end time T_{END}, it is determined whether or not the reservation program that is likely to overlap with the recording program in terms of recording time zone is present (Step S85), the user can correctly know whether or not the recording time zone of the recording program overlaps with that of the reservation program. Accordingly, the user can set a recording schedule quickly, simply and efficiently. In addition, since the recording operation is automatically ended when the current time reaches the recording end time T_{END} (Step S86), the capacity of the recording medium such as the hard disk 33 or the like can be saved.

### 5. Modification of Third Embodiment

In the third embodiment, the reservation-setting unit 40 calculates the recording end time T_{END} of the recording program based on the EPG information (Step S84) and then, based on the recording end time T_{END}, determines whether or not the reservation program that is likely to overlap with the recording program in terms of recording time zone is present (Step S85). Instead of this sequence, the user may specify the recording end time T_{END} by himself/herself. Specifically, after the user inputs the recording start instruction, the reservation-setting unit 40 generates and displays an input picture for urging the user to input recording end time or recording time (for example, one hour or two hours) of the broadcasting program. After the completion of the input, the broadcasting program starts to be recorded (Step S81). Thereafter, instead of the Steps S82 to S84 , the reservation-setting unit 40 calculates the recording end time T_{END} of the recording program based on the recording end time or the recording time inputted by the user. The subsequent sequences are equal to the sequences of the Steps S85 to S90. This modification allows the user to set a recording schedule quickly, simply and efficiently based on the recording end time or the recording time inputted by him/her.

### 6. Fourth Embodiment

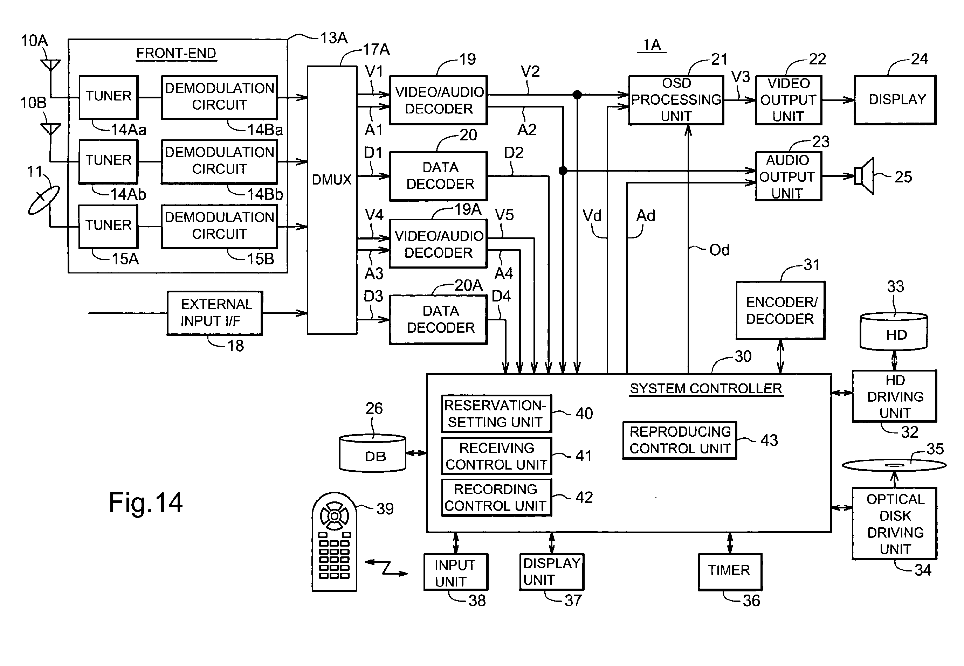

Next, a fourth embodiment of the invention will be described. Fig. 14 is a block diagram schematically showing a recording and reproducing apparatus 1A according to a fourth embodiment of the invention. In Figs. 14 and 1, blocks having the same reference numerals have the same construction and function. The recording and reproducing apparatus 1A shown in Fig. 14 is different from the recording and reproducing apparatus 1 shown in Fig. 1 in that the former has a receiving unit that can receive a plurality of broadcasting programs transmitted through a plurality of channels simultaneously, and a function of recording the plurality of received broadcasting programs in a recording medium simultaneously.

Referring to Fig. 14, a front-end 13A includes two terrestrial digital broadcasting sets and a satellite digital broadcasting set. One of two terrestrial broadcasting sets includes a receiving antenna 10A, a tuner 14Aa and a demodulation circuit 14Ba, and the other includes a receiving antenna 10B, a tuner 14Ab and a demodulation circuit 14Bb. Accordingly, the front-end 13A can receive two terrestrial digital broadcasting programs simultaneously.

A separation circuit (DMUX) 17A selects two of input signals from the front-end 13 and the external input interface 18 according to control due to the system controller 30, separates one of the selected input signals into a plurality of coded signals V1, A1 and D1, and separates the other of the selected input signals into a plurality of coded signals V4, A3 and D3. Accordingly, the separation circuit 17A can separate two selected signals simultaneously. The coded signals V1, A1 and D1 are decoded by one set of video/audio decoder 19 and data decoder 20, while the coded signals V4, A3 and D3 are decoded by another set of video/audio decoder 19A and data decoder 20A. The video/audio decoder 19A and the data decoder 20A have the same function as the video/audio decoder 19 and the data decoder 20, respectively. However, the video/audio decoder 19A supplies a video signal V5 and an audio signal A4 to the system controller 30, and the data decoder 20A supplies a data signal D4 to the system controller 30.

The recording control unit 42 controls the encoder/decoder 31 to compress and code the video signal V2 and the audio signal A2 and transmits the coded signals to the recording medium 32 or 34, while controlling the encoder/decoder 31 to compress and code the video signal V5 and the audio signal A4 and transmitting the coded signals to the recording medium 32 or 34, according to an instruction inputted by a user through the input unit 38. That is, the recording control unit 42 can record two broadcasting programs in the recording medium simultaneously. Although it is illustrated in this embodiment that two broadcasting programs are simultaneously recorded, a system may be modified such that three or more broadcasting programs are simultaneously received and recorded.

Also, the recording and reproducing apparatus 1A has an automatic recording function in addition to the above-described reservation recording function. The automatic recording function refers to a function of predicting user's taste based on reservation programs recorded by a user in the past or broadcasting programs selected by the user in the past and recording a broadcasting program included in a range of the user's taste. Accordingly, the reservation-setting unit 40 can automatically set a recording schedule even if the user does not set a reservation program. In the following description, for the sake of convenience of description, a reservation program by the reservation recording function is called "reservation recording program" and a reservation program by the automatic recording function is called "automatic recording program".

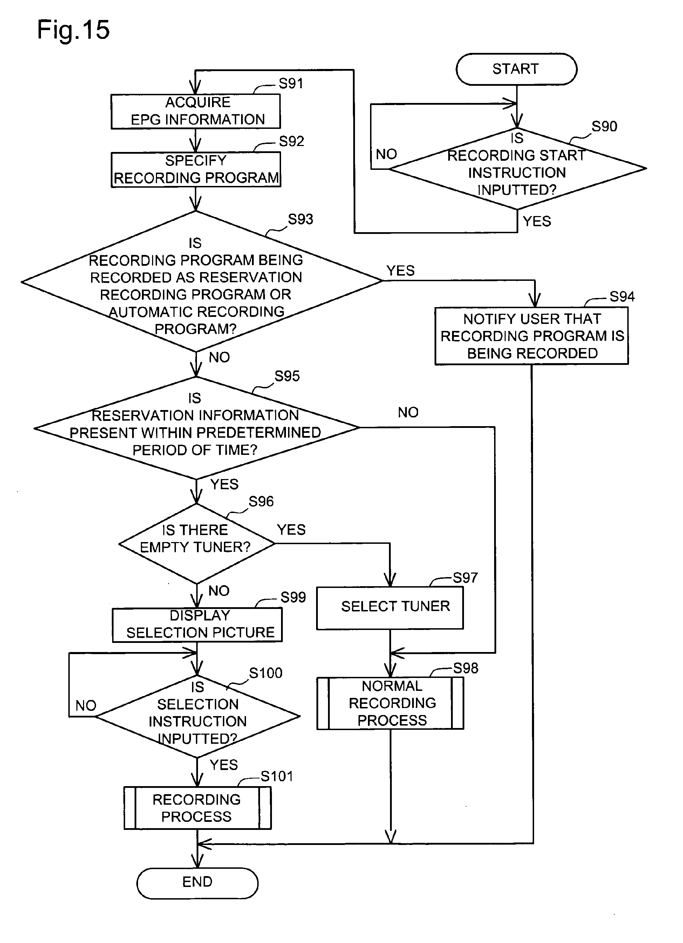

Hereinafter, the recording and reproducing apparatus 1A as constructed above will be described. Fig. 15 is a flow chart schematically showing a process sequence of a reservation recording method according to the fourth embodiment of the invention. On the assumption that a user has already completed to set a reservation program and is watching and hearing a broadcasting program, which is being currently selected and received, using the display 24 and the speaker 25, the process sequence of Fig. 15 is described as follows.

The reservation-setting unit 40 monitors whether or not a recording start instruction is inputted by a user through the input unit 38, and waits until the recording start instruction is detected (Step S90). If the user presses a recording button of the remote controller 39 to record a broadcasting program being watched by him/her, the reservation-setting unit 40 detects the pressing to determine that the recording start instruction is present. The reservation-setting unit 40 acquires EPG information by referring to the electronic information database in the reservation information DB 26 according to the recording start instruction (Step S91), and specifies a broadcasting program to be recorded (hereinafter referred to as a recording program) based on the EPG information (Step S92).

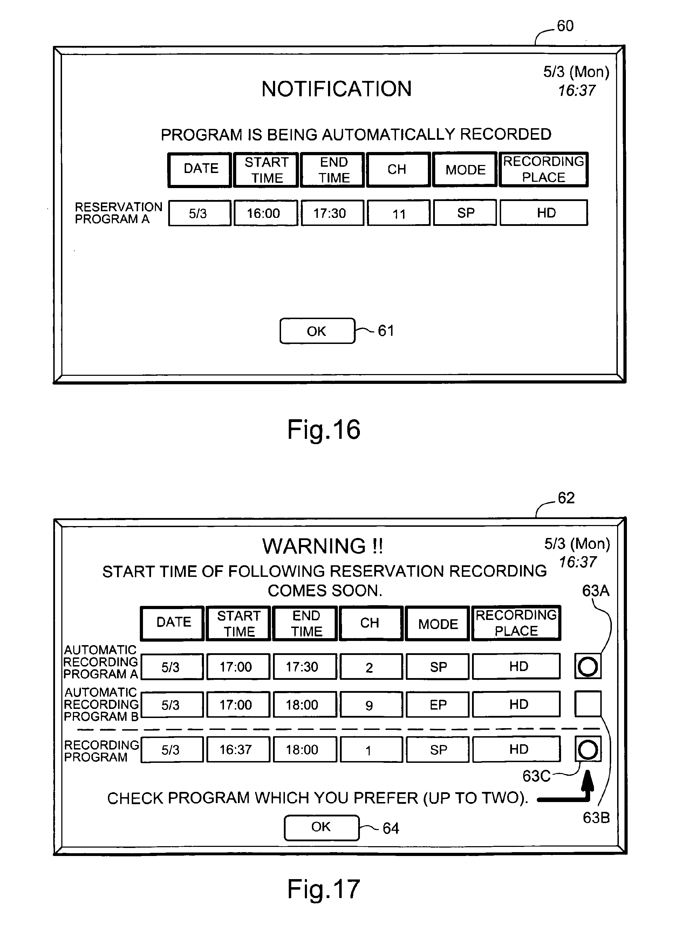

Next, the reservation-setting unit 40 determines whether or not the recording program is being recorded as a reservation recording program or an automatic recording program by referring to the reservation information DB 26 (Step S93). If it is determined that the recording program is being recorded (Step S93), the reservation-setting unit 40 notifies the user of the fact (Step S94). That is, the reservation-setting unit 40 generates a notification picture and supplies the video signal Vd or the OSD signal Od of the notification picture to the OSD processing unit 21. The OSD processing unit 21 transmits the video signal Vd to the video output unit 22 and gives the OSD signal Od superimposed on the video signal V2 to the video output unit 22. As a result, the notification picture is displayed on the display 24. Fig. 16 shows an example of a notification picture 60 while an automatic recording program is being recorded. The notification picture 60 includes a notification message and contents of reservation information of the automatic recording program. When the user operates the remote controller 39 to specify a confirmation button 61 after confirming the notification picture 60 displayed on the display 24, the notification picture 60 disappears.

On the other hand, if it is determined that the recording program is not being recorded (Step S93), the reservation-setting unit 40 determines whether or not the reservation information is present within a predetermined period of time, that is, whether or not there exists the reservation recording program or the automatic recording program that is likely to overlap with the recording program in terms of recording time zone, by referring to the reservation information DB 26 (Step S95). If it is determined that the reservation information is present, the reservation-setting unit 40 inquires whether or not a tuner which is not being currently used to receive the broadcasting program (empty tuner) is present (Step S96). If it is determined that the empty tuner is present, the receiving control unit 41 makes the empty tuner of the front-end 13 select a channel of the recording program (Step S97) and start a normal recording operation (Step S98) according to a request from the reservation-setting unit 40.

On the other hand, if it is determined that the empty tuner is not present (Step S96), the reservation-setting unit 40 generates a selection picture 62 as shown in Fig. 17 and supplies the video signal Vd or the OSD signal Od of the selection picture 62 to the OSD processing unit 21. The OSD processing unit 21 transmits the video signal Vd to the video output unit 22 and gives the OSD signal Od superimposed on the video signal V2 to the video output unit 22. As a result, the selection picture 62 is displayed on the display 24 (Step S99), thereby informing the user of the presence of the reservation recording program or the automatic recording program that is likely to overlap with the recording program in terms of recording time zone. At this time, the reservation-setting unit 40 may generate a warning sound for warning the user and supply the generated warning sound to the speaker 25 through the audio output unit 23.

Referring to Fig. 17, a warning picture 62 includes a warning message, reservation information of the automatic recording program, recording program information, and check boxes (preference mark) 63A, 63B and 63C for selecting one of reservation recording programs A and B and the recording program. The user may operate the remote controller 39 to specify (check) one of the check boxes 63A, 63B and 63C while confirming the warning picture 62. The automatic recording programs A, B and C are selected by specifying the check boxes 63A, 63B and 63C, respectively. At an initial state, the check boxes of all candidate programs may be checked and the user may erase only check of unnecessary programs. Here, the upper limit of the number of programs which can be simultaneously checked corresponds to the number of tuners which can receive the programs simultaneously, and if the number of check boxes which exceeds the upper limit is checked, a warning picture or a warning sound is generated and outputted to the display 24 or the speaker 25.

After the warning picture 62 is displayed, the reservation-setting unit 40 waits until a selection instruction to select a program is inputted to the reservation-setting unit 40 through the input unit 38 (Step S100), and if the user determines priority by specifying the check boxes and then presses a confirmation button 64, the selection instruction is outputted from the input unit 38. According to the selection instruction, the recording control unit 42 performs a recording operation for one or more programs which are specified by the user (Step S101).

As described above, in the reservation recording method according to the fourth embodiment, when the user tries to record the broadcasting program that is being currently received, if the broadcasting program is being recorded as the automatic recording program or the reservation recording program, he/she can know the presence of the automatic recording program (Step S94). Accordingly, useless recording can be avoided.

In addition, when the user tries to record the broadcasting program that is being currently received, it is determined whether or not an empty tuner is present (Step S96), and if it is determined that the empty tuner is present, the empty tuner can select a channel of the broadcasting program and receive and record the broadcasting program. Accordingly, when the user tries to record the broadcasting program, even if there exists an automatic recording program which overlaps with the broadcasting program in terms of recording time zone, since the broadcasting program is received and recorded by the empty tuner, it is possible to record the reservation recording program or the automatic recording program using a different tuner.

In addition, if it is determined that the empty tuner is not present, since the selection picture to urge the user to select a program is generated (Step S99), even if the automatic recording program is reserved without the knowledge of the user, the user can surely know the presence of the automatic recording program or the reservation recording program by confirming the selection picture, thereby making it possible to select and record a desired program.

### 7. Modification of First to Fourth Embodiments

Next, a modification common to the first to fourth embodiment will be described. For example, if a baseball game program is being broadcasted and a broadcasting time zone of the broadcasting program extends, a broadcasting time zone of a reservation program following the broadcasting program may be delayed in compliance with the extension. In this case, since a time zone reserved by the user is different from the actual broadcasting time zone of the reservation program, the reservation program may fail to be recorded. To overcome this problem, it is preferable that the recording and reproducing apparatus 1 automatically recognizes contents of video or audio of the broadcasting program that is being currently selected and received and automatically delays a reservation time zone of the reservation program according to a result of the recognition.

Specifically, the system controller 30 of the recording and reproducing apparatus 1 or 1A includes an analysis means (not shown) that analyzes the video signal V2 and the audio signal A2 which are supplied from the video/audio decoder 19, and detects whether or not the broadcasting program is ended, or calculates extension time of the broadcasting program based on a result of the analysis. The analysis means includes a video analysis means, an audio analysis means, a determining means and an analysis database. The video analysis means analyzes a luminance distribution pattern of the video signal V2 and the audio analysis means analyzes and recognizes contents of the audio signal A2. The determining means calculates feature of the broadcasting program by referring to the analysis database, based on a result of the analysis by the video analysis means and the audio analysis means. Since data representing a correspondence relationship between the broadcasting program and its feature are stored in the analysis database, the determining means compares the calculated feature with feature stored in the analysis database and can recognize, for example, a character string of a telop, kind of an object or a background picture, or voice contents of an announcer based on a result of the comparison.

The analysis means determines how long the user watches the broadcasting program and whether or not the broadcasting time of the broadcasting program extends at a predetermined point of time and the extension of the broadcasting program is ended, and if extension time of the broadcasting program is determined, sets the determined extension time. When the analysis means sets the extension time of the broadcasting program, the reservation-setting unit 40 changes a recording schedule of the broadcasting program reserved for a channel of the broadcasting program in compliance with the extension time. On the other hand, if the extension time is not set, the reservation-setting unit 40 calculates the extension time from a point of time when the analysis means recognizes that the extension of broadcasting time is ended, and changes the extension time the recording schedule of the broadcasting program in compliance with the extension time.

The above processes by the analysis means and the change of the recording schedule by the reservation-setting unit 40 may be performed in parallel with the Step S24 to S28 after performing the Step S22 shown in Fig. 5, or may be routinely performed in a series of sequence of the Steps S24 to S28, for example.

This application is based on Japanese Patent Application No. 2004-362687, the disclosure of which is incorporated herein by reference.

## Claims

1. A recording apparatus that receives and records contents transmitted via a transmission line, comprising:
a receiving unit that receives the contents;
a recording unit that stores the contents in a recording medium;
an input unit through which a recording start instruction of current contents that are being currently received by the receiving unit is inputted;
a reservation-setting unit that determines whether reservation information of reservation contents that are likely to overlap with the current contents in terms of recording time zone is set, according to the recording start instruction, and if it is determined that the reservation information is set, generates a selection picture which urges a user to select one of the current contents and the reservation contents;
a receiving control unit that controls the receiving unit to selectively receive one of the current contents and the reservation contents according to a selection instruction inputted to the input unit while displaying the selection picture; and
a recording control unit that starts recording of the contents selectively received by the receiving unit in the recording unit.

2. The recording apparatus according to Claim 1, wherein, if the selection instruction indicates selection of the current contents, the recording control unit starts recording of the current contents in the recording unit in preference to the reservation contents according to the selection instruction, and then, if stop time when the recording of the current contents stops is included in a recording scheduled time zone of the reservation contents, starts recording of the reservation contents in the recording unit.

3. The recording apparatus according to Claim 1 or 2, wherein, if the selection instruction indicates selection of the reservation contents, the recording control unit starts recording of the reservation contents in the recording unit in preference to the current contents according to the selection instruction.

4. The recording apparatus according to any one of Claims 1 to 3, wherein, if there exist a plurality of reservation contents that are likely to overlap with the current contents in terms of recording time zone, the reservation-setting unit generates a selection picture which urges a user to select at least one of the reservation contents.

5. A recording apparatus that receives and records contents transmitted via a transmission line, comprising:
a receiving unit that simultaneously receives a plurality of contents transmitted via a plurality of transmission channels;
a recording unit that stores the plurality of contents in a recording medium;
an input unit through which a recording start instruction of one of current contents that are being currently received by the receiving unit is inputted;
a reservation-setting unit that determines whether reservation information of reservation contents that are likely to overlap with the current contents in terms of recording time zone is set, according to the recording start instruction;
a receiving control unit that controls the receiving unit to receive the current contents and the reservation contents simultaneously if the reservation-setting unit determines that the reservation information is set; and
a recording control unit that simultaneously starts recording of the current contents and the reservation contents received by the receiving unit in the recording unit.

6. The recording apparatus according to any one of Claims 1 to 5, wherein the reservation-setting unit determines whether recording start time of the reservation contents is set as the reservation information within a predetermined period of time from current time according to the recording start instruction.

7. The recording apparatus according to any one of Claims 1 to 6, wherein, if the reservation-setting unit determines that the reservation information is set, the reservation-setting unit generates at least one of a warning picture and a warning sound that warn a user.

8. The recording apparatus according to any one of Claims 1 to 7, wherein, if the reservation-setting unit determines that the reservation information is not set, the recording control unit starts recording of the current contents in the recording unit according to a result of the determination.

9. The recording apparatus according to any one of Claims 1 to 8, wherein an operation mode in which the current contents are displayed on a display is forced to switch to an operation mode in which the selection picture is displayed on the display, according to the recording start instruction.

10. The recording apparatus according to any one of Claims 1 to 9, further comprising an electronic program database in which an electronic program guide is stored, wherein the reservation-setting unit acquires the electronic program guide by referring to the electronic program database, calculates recording end time of the current contents based on the acquired electronic program guide, and determines whether a recording scheduled time zone of the reservation contents that overlaps with a time zone from the current time to the recording end time is set as the reservation information, according to the recording start instruction.

11. The recording apparatus according to Claim 10, wherein the receiving unit receives the electronic program guide via the transmission line.

12. A recording method for receiving and recording contents transmitted via a transmission line, comprising the steps of:
(a) receiving a recording start instruction of current contents that are being currently received;
(b) determining whether reservation information of reservation contents that are likely to overlap with the current contents in terms of recording time zone is set, according to the recording start instruction;
(c) if it is determined at the step (b) that the reservation information is set, generating a selection picture which urges a user to select one of the current contents and the reservation contents;
(d) selectively receiving one of the current contents and the reservation contents according to a selection instruction inputted while displaying the selection picture; and
(e) starting recording of the contents selectively received at the step (d) in a recording medium.

13. The recording method according to Claim 12, wherein, if the selection instruction indicates selection of the current contents, the step (e) includes:
(e-1) starting recording of the current contents in the recording unit in preference to the reservation contents according to the selection instruction; and
(e-2) after performing the step (e-1), if stop time when the recording of the current contents stops is included in a recording scheduled time zone of the reservation contents, starting recording of the reservation contents.

14. The recording method according to Claim 12 or 13, wherein, if the selection instruction indicates selection of the reservation contents, the step (e) includes starting recording of the reservation contents in the recording medium in preference to the current contents according to the selection instruction.

15. The recording method according to any one of Claims 12 to 14, further comprising the step of, if there exist a plurality of reservation contents that are likely to overlap with the current contents in terms of recording time zone, generating a selection picture which urges a user to select at least one of the reservation contents.

16. A recording method for receiving and recording contents transmitted via a transmission line, comprising the steps of:
(a) receiving a recording start instruction of current contents that are being currently received;
(b) determining whether reservation information of reservation contents that are likely to overlap with the current contents in terms of recording time zone is set, according to the recording start instruction;
(c) if it is determined at the step (b) that the reservation information is set, simultaneously receiving the current contents and the reservation contents; and
(d) simultaneously starting recording of the current contents and the reservation contents received at the step (c) in a recording medium.

17. The recording method according to any one of Claims 12 to 16, wherein the step (b) includes determining whether recording start time of the reservation contents is set as the reservation information within a predetermined period of time from current time according to the recording start instruction.

18. The recording method according to any one of Claims 12 to 17, further comprising the step of, if it is determined at the step (b) that the reservation information is set, generating at least one of a warning picture and a warning sound that warn a user.

19. The recording method according to any one of Claims 12 to 18, further comprising the step of, if it is determined at the step (b) that the reservation information is not set, starting recording of the current contents in the recording medium according to a result of the determination.

20. The recording method according to any one of Claims 12 to 19, further comprising the step of forcedly switching an operation mode in which the current contents are displayed on a display to an operation mode in which the selection picture is displayed on the display, according to the recording start instruction.

21. The recording method according to any one of Claims 12 to 20, wherein the step (b) includes acquiring an electronic program guide, calculating recording end time of the current contents based on the acquired electronic program guide, and determining whether a recording scheduled time zone of the reservation contents that overlaps with a time zone from the current time to the recording end time is set as the reservation information, according to the recording start instruction.

22. The recording method according to Claim 21, further comprising the step of receiving and storing the electronic program guide via the transmission line.
